# FASCICULE DE BREVET EUROPEEN

(11) **EP 3 415 278 B1**
(45) Date de publication et mention de la délivrance du brevet: **26.07.2023**
(21) Numéro de dépôt: 18175457.3
(22) Date de dépôt: 01.06.2018
(51) Int. Cl.: B25B 5/14, B23Q 3/06

(54) **DISPOSITIF DE MAINTIEN À L'AIDE D'UNE PLURALITÉ DE PLAQUES EMPILÉES**
HALTEVORRICHTUNG MITHILFE EINER VIELZAHL VON GESTAPELTEN PLATTEN
DEVICE FOR HOLDING BY MEANS OF A PLURALITY OF STACKED PLATES

(30) Priorité: 14.06.2017 FR 1755369
(43) Date de publication de la demande: 19.12.2018
(73) Titulaire: IJSPEERT Innovative Technologies, 1219 Aïre (CH)
(72) Inventeur: IJSPEERT, Albert Jan, 1219 Aïre (CH)
(74) Mandataire: Vigand, Philippe

(56) Documents cités:
- EP-A1- 0 104 286
- EP-A1- 2 002 926
- EP-A1- 2 842 725
- DE-A1-102009 056 812
- DE-U1-202005 009 746
- US-A- 4 691 905
- US-A1- 2015 174 706

## Description

La présente invention concerne de manière générale le domaine de l'usinage et/ou de la métrologie, et en particulier un dispositif de maintien d'une pièce à brider, telle qu'une pale ou une hélice, ou d'une manière générale de tout objet ayant une forme simple ou complexe, notamment dans le cas de formes à section variable.

Il est connu dans l'art antérieur des dispositifs de bridage ou de maintien d'un objet.

Le document CN105935851 divulgue un dispositif de maintien d'une pale de moteur d'avion ou de turbine, doté d'une pluralité de vis de serrage.

En contrepartie, ce système présente notamment l'inconvénient de serrer de manière ponctuelle la pièce à maintenir, ce qui peut entrainer des dommages localement en raison de pressions de contact élevées. De plus, il est nécessaire de régler une à une les vis de serrage afin de parvenir à brider la pièce, ce qui est fastidieux et coûteux et comporte un risque d'erreur important.

Le document EP2842725A1 divulgue un outil de serrage avec des plaques longitudinales qui forment une empreinte de moulage pour résine, avec des plaques de renfort transversales. Le document EP2002926 divulgue un dispositif de maintien d'une aube de turbine. Les documents DE 20 2005 009746 U1 et US 4 691 905 A divulguent des outils similaires. Le document DE202005009746 divulgue un dispositif de maintien pour brider une pièce à brider comprenant une surface de contact, le dispositif de maintien comprenant au moins un mors destiné à entrer en contact avec la surface de contact de la pièce à brider, le mors comprend une pluralité de plaques de serrage, empilées les unes sur les autres et comprenant chacune sur leur tranche une surface de bridage agencée pour être en contact avec une portion de la surface de contact de la pièce à brider, et dans lequel les plaques de serrage sont empilées le long d'une direction longitudinale de la pièce à brider, et dans lequel le dispositif de maintien comprend en outre au moins une mâchoire ayant une cavité agencée pour recevoir au moins une portion de la pluralité de plaques de serrage.

Un but de la présente invention est de répondre aux inconvénients du document de l'art antérieur mentionné ci-dessus et en particulier, tout d'abord, de proposer un dispositif de maintien d'une pièce à brider qui évite tout endommagement de la pièce au niveau du contact avec le dispositif de maintien, tout en étant rapide à utiliser.

Pour cela, un premier aspect de l'invention concerne un dispositif de maintien pour brider une pièce à brider comprenant une surface de contact,
le dispositif de maintien comprenant au moins un mors destiné à entrer en contact avec la surface de contact de la pièce à brider,
le mors comprend une pluralité de plaques de serrage indépendantes les unes des autres, agencées pour permettre un mouvement relatif entre elles et garantir un contact de chacune d'entre elles avec la pièce à brider, empilées les unes sur les autres et comprenant chacune sur leur tranche une surface de bridage agencée pour être en contact avec une portion de la surface de contact de la pièce à brider, et dans lequel les plaques de serrages sont empilées le long d'une direction longitudinale de la pièce à brider, et dans lequel le dispositif de maintien comprend en outre au moins une mâchoire ayant une cavité agencée pour recevoir au moins une portion de la pluralité de plaques de serrage, et dans lequel la pluralité de plaques de serrage présente une surface arrière opposée à la pièce à brider, de forme arrondie de sorte à former une liaison pivot entre la mâchoire et la pluralité de plaques.

Ceci permet de proposer un dispositif de maintien efficace et peu coûteux, facilement adaptable et avec une surface de bridage optimisée. Le dispositif de maintien est donc un dispositif de bridage ou de serrage d'une pièce à brider qui est fermement maintenue en vue d'être usinée ou mesurée lors d'une opération de métrologie. La pluralité de plaques permet d'augmenter la surface de bridage en contact avec la surface de contact de la pièce à brider afin de réduire la pression de contact et de la répartir uniformément sur la pièce à brider, de sorte à être moins mordant et ne pas entamer la matière de la pièce à brider. Ceci permet d'éviter tout endommagement de la pièce à brider au niveau du contact avec le dispositif de maintien, notamment un endommagement par matage, enfoncement, indentation, griffure ou flexion.

On entend par mors une pièce d'un dispositif de maintien ou de serrage, tel qu'un étau, un mandrin, ou un plateau de machine-outil, qui entre en contact avec la pièce à serrer. On entend par étau un appareil formé de deux mâchoires dont au moins une est mobile, et dont le serrage est réalisé manuellement ou automatiquement, à l'aide d'une vis, par un dispositif pneumatique, hydraulique ou mécanique, comme une sauterelle ou une bielle à arc-boutement, qui permet de maintenir en place une pièce ou un objet que l'on veut travailler. Le mors est généralement installé sur ou dans la mâchoire et est de préférence mobile afin de permettre un serrage rapide. On entend par mandrin un appareil fixé sur le nez d'une machine-outil ou de certains outils portatifs servant au maintien ou au serrage d'une pièce et généralement à son entrainement en rotation. On entend par tranche un bord mince d'un objet de faible épaisseur. On entend par plaque une feuille, généralement plus large qu'épaisse, souvent rigide, et qui peut être éventuellement évidée. Il peut également s'agir d'une lame, telle qu'un morceau de métal ou d'une autre matière dure, plat et étroit. On entend par pile un amas de choses disposées ou rangées les unes sur les autres, ou un ensemble d'objets de même nature entassés les uns sur les autres. Les pièces empilées peuvent être en contact les unes sur les autres ou espacées par un écarteur tout en formant une pile.

Autrement dit, les plaques rangées les unes sur les autres sont indépendantes les unes des autres pour permettre un mouvement relatif entre elles (glissement ou pivotement relatif) et garantir un contact de chacune d'entre elles avec la pièce à brider.

Avantageusement, le dispositif de maintien est agencé pour être installé dans un étau, un mandrin ou un plateau de machine-outil.

Avantageusement, le dispositif de maintien fait partie d'un outil de machine-outil, telle qu'une machine-outil destinée à l'usinage ou à la métrologie.

Ceci permet de permet de proposer un dispositif de maintien adapté pour être utilisé dans des outillages classiquement disponibles dans un atelier ou dans le commerce.

Avantageusement, le dispositif de maintien fait partie d'un dispositif de transport.

Ceci permet de proposer un dispositif de maintien adapté pour être utilisé pour le transport de pièce, en particulier des pièces de forme complexe, fragile ou de grandes tailles.

Avantageusement, les plaques ont une épaisseur inférieure à 3 mm.

Ceci permet de proposer un dispositif de maintien avec une surface de bridage optimisée, et permet une découpe ou un usinage rapide permettant de réaliser des profils complexes et bon marché. En effet, découper unitairement les plaques selon un profil correspondant à la pièce à brider est aisé et rapide, il suffit ensuite de les empiler pour obtenir le mors de serrage qui présente une contre forme de la pièce à brider, sur une grande surface.

Avantageusement, les plaques ont une épaisseur inférieure à 1 mm.

Ceci permet d'avoir une meilleure adaptation de la surface de bridage. Le choix de l'épaisseur est notamment fait de sorte à limiter le risque de flambage des plaques, qui peuvent être également guidées latéralement à cette même fin.

Avantageusement, les plaques de serrage sont empilées le long d'une direction de l'épaisseur de chaque plaque de serrage.

Ceci permet de proposer une nappe ou une pile de plaques avec une grande capacité d'adaptation et de choix des plaques de serrage, avec une grande facilité de mise en oeuvre.

Avantageusement, les plaques de serrage sont empilées le long d'une direction longitudinale de la pièce à brider.

Ceci permet de proposer un dispositif de maintien efficace et adapté à une pièce sensiblement longitudinale, comme par exemple des ailettes de turbines.

Avantageusement, la surface de bridage de chaque plaque présente un profil de contact spécifique formant une contre-forme de la portion de la surface de contact de la pièce à brider. En d'autres termes, au moins deux plaques de la pluralité de plaques présentent une surface de bridage différente.

On entend par contre-forme une forme s'adaptant exactement à la forme opposée ou en regard de celle-ci. On entend également par là une forme en miroir ou une surface correspondante, notamment grâce à une continuité de contact. On peut également considérer une correspondance, une similarité ou une égalité des rayons de courbure entre la surface de bridage de chaque plaque et la portion de surface de contact correspondante de la pièce à brider. Chaque surface de bridage de chaque tranche est alors unitairement en contact avec une portion de la surface de contact de façon continue. La surface de bridage est ainsi de préférence sensiblement rectangulaire et étroite en projection orthogonale, semblable à une raie, sans pour autant se limiter à une telle forme.

Ceci permet de proposer un dispositif de maintien avec la surface de bridage la plus exactement adaptée à la surface de la pièce à brider, de sorte à réduire la pression de contact et de ne pas endommager la pièce. Il s'agit d'une répartition des efforts la plus homogène possible afin de ne pas marquer ou endommager la pièce à brider. Cependant, chacune de la pluralité de plaques est préalablement découpée unitairement, ce qui ne nécessite qu'une machine de découpe (laser, fil, scie...), tout en permettant de reproduire une surface complexe au final avec la pile de plaques.. Ceci permet également de maintenir ou de serrer la pièce à brider fermement afin de réaliser des opérations d'usinage ou de rodage, de mesures précises, de soudage, notamment par friction ou toutes autres opérations d'entretien, de fabrication ou de contrôle. Ceci est ainsi particulièrement adapté pour les opérations sur les pièces ayant une forme complexe ou compliquée. Dans le cas d'une pièce simple, la pluralité de plaques pourra être sensiblement perpendiculaire à la surface de contact. On entend par perpendiculaire un angle de 90 degrés, préférentiellement +/- 5 degrés, très préférentiellement +/- 1 degré. En d'autres termes, la répartition du contact tout le long de la surface de bridage de la tranche réduit le matage, grâce à des pressions de contact projetées sur toute la tranche.

Avantageusement, la surface de bridage de chaque plaque de serrage est normale ou perpendiculaire aux faces latérales des plaques de serrage.

Ceci permet de proposer un dispositif de maintien avec un agencement compacte, une grande adaptabilité et une grande facilité de fabrication. En effet, c'est la géométrie obtenue par une découpe classique : la tranche est perpendiculaire aux faces latérales de la plaque découpée.

Avantageusement, les plaques comprennent un marquage et sont ordonnées afin d'appairer les plaques à une portion respective de la surface de contact de la pièce à brider, de sorte à localiser et épouser la pièce à brider.

On entend par localiser le fait de déterminer la place d'un objet, l'endroit où il se situe. En particulier, chaque plaque doit être en regard d'une portion spécifique de la pièce à brider. Le marquage permet d'empiler les plaques dans le bon ordre.

Ceci permet de proposer un dispositif de maintien avec une excellente adaptabilité et adéquation à la pièce à serrer, avec une pression de contact réduite afin de ne pas endommager la pièce et de pouvoir la tenir fermement et réaliser toute opération utile sur la pièce à brider. Ceci est également particulièrement intéressant dans le cas de l'utilisation de plusieurs dispositifs de maintien sur une même pièce à brider, de sorte que chaque dispositif de maintien peut s'adapter à la forme de la pièce à brider, en particulier si la pièce à brider comporte des formes différentes aux endroits en contact avec les dispositifs de maintien. Ceci est également particulièrement intéressant dans le cadre de la réutilisation de la pluralité de plaques pour une seconde opération ou une opération de maintenance sur une même pièce, après une période de fonctionnement de la pièce à brider selon sa destination. Il suffit dès lors de stocker la pluralité de plaques dans l'attente.

Avantageusement, le dispositif comprend en outre au moins une mâchoire ayant une cavité agencée pour recevoir au moins une portion de la pluralité de plaques de serrage.

Ceci permet de proposer un dispositif de serrage avec une mâchoire, notamment une mâchoire mobile, afin de réaliser un serrage aisé de la pièce à brider. La cavité de la mâchoire permet ainsi de tenir le mors.

Avantageusement, le dispositif comprend en outre des moyens de réglage ou de serrage, tel qu'une vis, une pièce ou un ensemble mécanique tel qu'un pion ou une goupille, un vérin ou une crémaillère afin de permettre le serrage ou le pinçage ou la tenue de la pluralité de plaques de serrage entre elles ou sur les mâchoires ou le serrage ou le pinçage des plaques de serrage sur la pièce à brider.

Ceci permet de proposer un dispositif de maintien efficace et adapté à la pièce à brider.

Avantageusement, le dispositif comprend une matière adhérente agencée entre les plaques de serrage de la pluralité de plaques de serrage de sorte à réaliser un collage et une protection des plaques de serrage.

Ceci permet de proposer un dispositif de maintien efficace avec des plaques de serrage collées entre elles, notamment à l'aide d'une injection de plastique ou de colle, et dans lequel les plaques de serrage sont protégées de la saleté. Les plaques de serrage de la pluralité de plaques sont ainsi solidaires tout en étant très faciles à réaliser.

Avantageusement, le dispositif comprend en outre :
- au moins une mâchoire ayant une cavité agencée pour recevoir au moins une portion de la pluralité de plaques de serrage, et
- au moins un demi-cylindre, agencé entre l'au moins une mâchoire et l'au moins un mors, afin de permettre l'ajustement du dispositif de maintien à une erreur d'alignement de la pièce à brider dans le dispositif de maintien.

Ceci permet de proposer un dispositif de maintien qui permet de s'adapter à une erreur de positionnement angulaire de la pièce grâce au degré de liberté supplémentaire apporté par le demi-cylindre. Il s'agit en effet d'une liaison pivot entre la mâchoire et le mors. Les plaques peuvent également coulisser les unes sur les autres. En d'autres termes, les plaques sont indépendantes les unes des autres. Avantageusement, le demi-cylindre présente un axe perpendiculaire ou sensiblement perpendiculaire à une direction axiale de la pièce à brider. Avantageusement, le demi-cylindre présente un axe contenu ou sensiblement contenu dans un plan de chacune des plaques.

Avantageusement, la pluralité de plaques de serrage présente une surface arrière opposée à la pièce à brider, de forme arrondie de sorte à former une autre liaison pivot entre la mâchoire et la pluralité de plaques, ou entre la mâchoire et chaque plaque. Avantageusement, cette autre liaison pivot présente un axe parallèle ou sensiblement parallèle à une direction axiale de la pièce à brider. Avantageusement, cette autre liaison pivot présente un axe perpendiculaire ou sensiblement perpendiculaire à un plan de chacune des plaques. Avantageusement, au moins une des plaques de la pluralité de plaques présente un blocage du degré de liberté de l'autre liaison pivot de sorte à réaliser un indexage angulaire de la pièce à brider.

Ceci permet de proposer un dispositif de maintien avec une adaptation angulaire et des degrés de libertés supplémentaires afin de s'adapter parfaitement à la pièce à brider et aux opérations prévues sur la pièce à brider. Ceci est également particulièrement intéressant dans le cas d'une utilisation de plusieurs dispositifs de maintien sur une même pièce à brider. Cela empêche également l'hyper statisme.

Avantageusement, le dispositif de maintien comprend en outre :
- au moins une mâchoire ayant une cavité agencée pour recevoir au moins une portion de la pluralité de plaques de serrage, et
- une pluralité de plaques de soutien, chacune étant agencée entre une des plaques de serrage et l'au moins une mâchoire.

Ceci permet de proposer un dispositif de maintien avec une grande adaptabilité, permettant d'utiliser les pièces de serrage en tant que plaques de rechange, afin d'améliorer l'interchangeabilité.

Avantageusement, chaque plaque de soutien se situe dans le prolongement de la plaque de serrage qu'elle soutient par la tranche, et les surfaces de contact entre les plaques de soutien et les plaques de serrage sont décalées en quinconce de sorte à réaliser une forme de peigne dans lequel au moins une face latérale d'au moins une plaque de serrage est épaulée par la surface latérale de la plaque de soutien ou de la plaque de serrage voisine.

Avantageusement, chaque plaque de soutien comprend un épaulement et les plaques de soutien sont agencées parallèlement aux plaques de serrage, de sorte à former un peigne.

Ceci permet de proposer un dispositif de maintien, avec une grande adaptabilité, notamment en réglant autant que désiré un espacement entre les plaques de serrage. Cela permet d'ajuster la longueur de bras de levier pour une meilleure préhension de la pièce.

Avantageusement,
- chaque plaque de serrage comprend en outre une surface arrière opposée à la surface de bridage,
- chaque plaque de soutien comprend sur sa tranche une surface de soutien agencée pour être en contact avec la surface arrière d'une des plaques de serrage,
- la surface de soutien de chaque plaque de soutien présente un profil de contact spécifique formant une contre-forme d'une des surfaces arrières des plaques de serrage.

Ceci permet de proposer un dispositif de maintien avec une grande adaptabilité, notamment en proposant des formes permettant de bloquer certaines plaques de serrage ou au contraire d'en laisser plus libres certaines, et ainsi d'adapter le dispositif de maintien à l'opération à réaliser, et notamment de définir une référence angulaire. En d"autres termes, les plaques sont indépendantes les unes des autres pour permettre un glissement ou pivotement relatif.

Avantageusement, le dispositif de maintien comprend en outre un dispositif de protection, tel qu'une couverture en caoutchouc ou en polymère, ou une feuille en métal doux afin de protéger la surface de contact de la pièce à brider.

Ceci permet de proposer un dispositif de maintien avec un serrage optimisé et de rattraper les erreurs ou irrégularités de surface.

Avantageusement, le dispositif de maintien comprend en outre un goujon de plaquage ou de serrage, comprenant une portion ayant un profil spécifique,
les plaques de serrage comprenant chacune une ouverture de passage, agencée pour recevoir le goujon de plaquage et comprenant une autre surface arrière ayant un profil arrondi du côté de la pièce à brider et présentant une contre-forme du profil spécifique du goujon,
le goujon étant agencé pour permettre le plaquage de la pluralité de plaques de serrage entre elles et pour mettre en regard la portion de profil spécifique du goujon et l'autre surface arrière de chaque plaque de serrage, de sorte à permettre l'ajustement en rotation de chaque plaque de serrage avec la pièce à brider.

En d'autres termes, le goujon de plaquage ou de serrage fait office de mâchoire, et l'autre surface arrière de chacune des plaques de serrage est agencée pour être en contact et appui sur la portion ayant un profil spécifique du goujon, en particulier lors du bridage de la pièce à brider.

Ceci permet de proposer un dispositif de serrage compact et économique, épousant parfaitement la surface de la pièce à brider et limitant l'endommagement de la pièce à brider dû au serrage.

Un deuxième aspect de la présente invention non revendiqué concerne un procédé de fabrication d'un dispositif de maintien d'une pièce à brider, comprenant les étapes suivantes :
- détermination d'une surface de contact de la pièce à brider,
- découpe par exemple laser ou jet d'eau ou usinage de chacune d'une pluralité de plaques de serrage afin de réaliser une surface de bridage sur la tranche de chaque plaque de serrage,
- empilage de la pluralité de plaques de serrage afin de définir une contre-forme de la surface de contact de la pièce à brider.

Ceci permet de proposer un procédé de fabrication d'un dispositif de maintien d'une pièce à brider qui épouse ou s'adapte exactement à la forme de la pièce à brider, et permet de réduire la pression de contact sur sa surface de contact et de bloquer la pièce à l'endroit adapté afin de répondre aux sollicitations issues de l'opération réalisée sur la pièce à brider. De plus, chaque surface de bridage de chaque plaque de serrage peut être spécifiquement adaptée à la portion de la surface de contact de la pièce à brider. En d'autres termes, cela revient à sous-diviser la surface de contact en tranches pour définir les formes des tranches des plaques, afin de définir une contre-forme spécifique pour chaque plaque parfaitement adaptée à la surface de contact de la pièce à serrer, de sorte à ce que chaque tranche de plaque puisse être respectivement en contact avec la portion respective de la surface de contact de la pièce à brider. Autrement formulé, il s'agit de sous-diviser la surface de contact en contours à brider et déterminer la forme de chacune des plaques de serrage respectivement correspondante.

Avantageusement, la détermination de la surface de contact de la pièce à brider est réalisée à l'aide d'un scannage en trois dimensions, tel que réalisé au moyen d'une nappe laser, d'un échographe, d'un radioscope, ou d'un palpeur.

Ceci permet de proposer un dispositif de maintien avec une grande adaptabilité à la pièce à brider.

Avantageusement, la détermination de la surface de contact de la pièce à brider est réalisée à l'aide d'un fichier de conception assisté par ordinateur.

Ceci permet de proposer un dispositif de maintien efficace et peu coûteux.

Un troisième aspect de la présente invention non revendiqué concerne un procédé de maintien d'une pièce à brider, comprenant les étapes suivantes :
- fournir un dispositif de maintien d'une pièce à brider comprenant une pluralité de plaques de serrage empilées les unes sur les autres et comprenant chacune sur leur tranche une surface de bridage agencée pour être en contact avec une portion d'une surface de contact de la pièce à brider,
- positionner la pile de plaques de serrage de la pluralité de plaques de serrage en regard de la surface de contact de la pièce à brider, chaque surface de bridage de chaque plaque étant en regard d'une portion respective de la surface de contact de la pièce à brider.

Ceci permet de proposer un procédé de maintien d'une pièce à brider permettant de réduire la pression de contact sur la pièce à brider et de s'adapter parfaitement à la pièce à brider ainsi qu'à l'opération à réaliser sur la pièce.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente deux dispositifs de maintien d'une pièce à brider suivant la présente invention, dans lequel les dispositifs sont ouverts,
- la figure 2 représente deux dispositifs de maintien dans lequel les dispositifs sont fermés,
- la figure 3 représente une partie du dispositif de maintien en vue éclatée,
- la figure 4 représente une partie de deux dispositifs de maintien comprenant des demi-cylindres afin de compenser une erreur d'alignement de la pièce à brider,
- la figure 5 représente une partie du dispositif de maintien avec goujon de serrage à coeur.

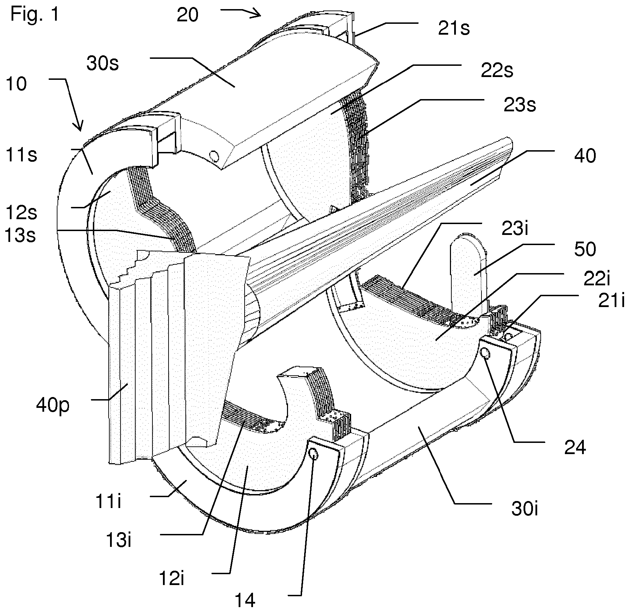

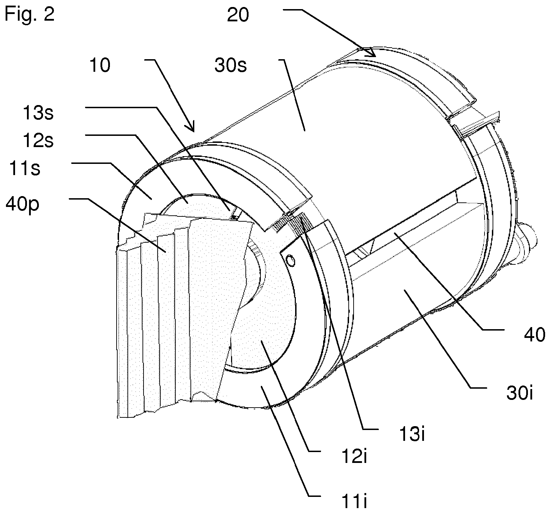

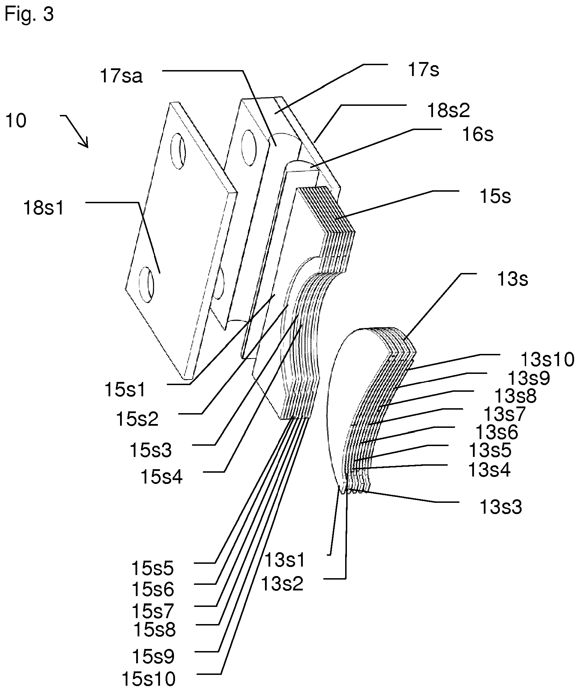

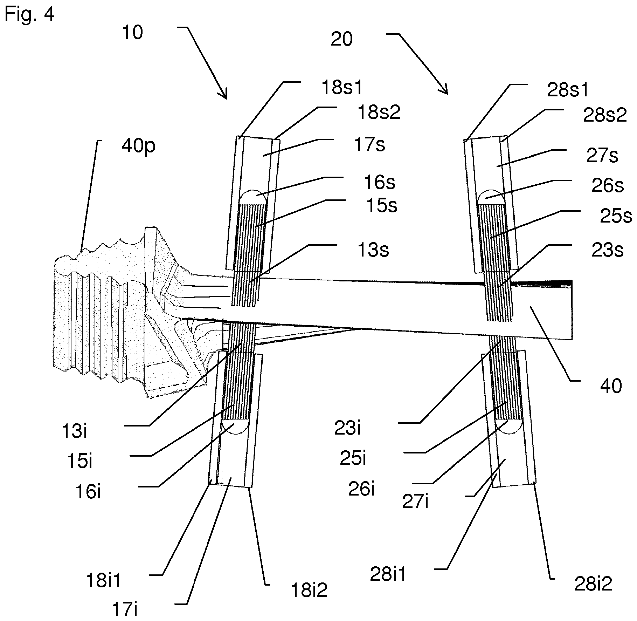

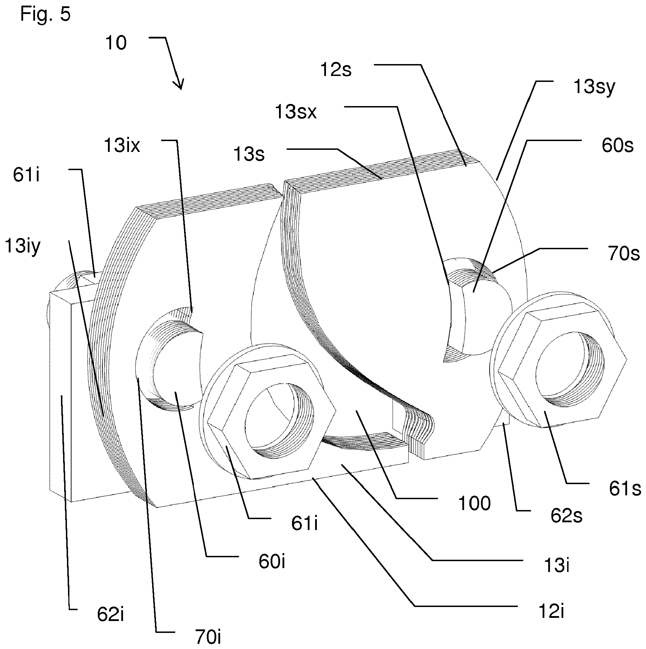

Les figures 1 et 2 correspondent à un premier mode de réalisation de la présente invention, les figures 3 et 4 correspondent à un deuxième mode de réalisation, et la figure 5 représente un troisième mode de réalisation.

La figure 1 représente deux dispositifs de maintien d'une pièce à brider suivant la présente invention, dans lequel les dispositifs sont ouverts. Le dispositif de maintien 10 comprend deux mâchoires, une mâchoire inférieure 11i et une mâchoire supérieure 11s, deux mors, un mors inférieur 12i et un mors supérieur 12s respectivement. Chaque mors est constitué d'une pluralité de plaques de serrage, respectivement pluralité de plaques de serrage inférieure 13i pour le mors inférieur 12i et pluralité de plaques de serrage supérieure 13s pour le mors supérieur 12s. Les mâchoires 11i et 11s, les mors 12i et 12s et les plaques 13i et 13s peuvent être réalisées en acier. Les plaques 13i et 13s peuvent également être réalisées en d'autres métaux, comme des métaux plus mous notamment. Il peut s'agir de plaques en aluminium afin d'être moins mordantes.

Il en est de même pour le deuxième dispositif de maintien 20, comprenant deux mâchoires supérieure 21s et inférieure 21i, et deux mors supérieur 22s et inférieur 22i. Chaque mors supérieur 22s et inférieur 22i comprend une pluralité de plaques de serrage supérieure 23s et inférieure 23i respectivement.

Les deux dispositifs de maintien 10 et 20 sont séparés par une entretoise supérieure 30s et une entretoise inférieure 30i, liées aux mâchoires supérieures 11s, 21s et inférieures 11i, 21i, respectivement, afin de garantir un espacement entre les deux dispositifs de maintien 10, 20.

Les dispositifs de maintien sont destinés au bridage ou au maintien d'une pale 40, comme une pale de turbine, comprenant un pied de pale 40p usiné, également appelé communément pied de sapin 40p. Les dispositifs de maintien permettent de tenir la pale 40 comme dans un moule afin d'usiner le pied de pâle 40p ou de procéder à une campagne de mesures de précision.

Chaque pluralité de plaques 13s, 13i, 23s, 23i, comprend une pile de plaques empilées les unes sur les autres, chaque plaque comprenant sur une tranche une surface de bridage agencée pour être en contact avec une portion d'une surface de contact de la pièce à brider, présentement la pale 40. La surface de bridage de chaque plaque présente un profil de contact spécifique formant une contre-forme de la portion de la surface de contact de la pièce à brider. En d'autres termes, chaque plaque est spécifiquement adaptée à la forme de la pâle 40 afin de réduire la pression de contact sur la pièce et de ne pas l'endommager. Ainsi, la pluralité de plaques épouse ou s'adapte exactement à la surface de contact de la pâle 40 afin de pouvoir la maintenir fermement de façon continue sur tout le long de sa tranche.

On peut ainsi voir sur la figure 1 que les pluralités de plaques 13i, 13s, 23i, 23s ont des formes générales différentes afin de s'adapter à l'évolution de profil de la pale 40 le long d'une direction longitudinale et/ou angulaire de celle-ci. Chacune des plaques est également parfaitement adaptée à l'évolution de profil de la pâle 40. Enfin, les plaques ont une épaisseur d'environ 1 mm afin de proposer une surface d'appui suffisante, mais cette épaisseur peut être adaptée, notamment en cas de forte variation de profil de la pale 40 afin d'adapter chaque plaque encore plus précisément par rapport aux plaques adjacentes. Les pluralités de plaques 13i, 13s, 23i, 23s sont tenues ou maintenues par des goupilles 14, 24, et par les mâchoires supérieures 11s, 21s et inférieures 11i, 21i, de sorte à laisser assez de jeu pour que les plaques puissent s'adapter librement à la surface de la pièce à brider, la pâle 40 représentée en figure 1. Chacune des plaques présente une surface arrière arrondie, opposée à la surface de bridage agencée pour être en contact avec la pâle 40, afin de permettre à chaque plaque de pivoter assez pour s'adapter à la surface de contact de la pâle 40 et adapter l'orientation angulaire. En d'autres termes, chaque plaque est indépendante de la ou des plaques adjacentes. Enfin, il est possible de prévoir un doigt de positionnement 50 agissant comme une butée axiale, afin de s'assurer du positionnement de la pâle 40.

Il est ainsi possible de déterminer la surface de contact de la pièce à brider, notamment par scannage à l'aide d'une nappe laser, d'un radioscope ou d'un échographe ou encore d'un palpeur et d'exporter cette forme à l'aide d'un logiciel de dessin assisté par ordinateur afin d'adapter et découper au laser, au jet d'eau ou par usinage chacune des plaques des pluralités de plaques 13i, 13s, 23i, 23s.

Il est alors possible de refermer les dispositifs de maintien 10, 20 sur la pale 40 afin de la maintenir fermement, tel qu'il est représenté en figure 2, et dont la description suit.

La figure 2 représente deux dispositifs de maintien dans lequel les dispositifs sont fermés. Les dispositifs de maintien 10, 20 sont représentés fermés sur la pale 40, afin de permettre notamment le maintien (le serrage ou le bridage comme dans un outillage d'usinage) ferme de la pale 40, pour ensuite réaliser l'usinage du pied de pale 40p ou tout autre opération jugée utile ou nécessaire.

Les dispositifs de maintien 10, 20 sont espacés par les entretoises inférieure 30i et supérieure 30s afin d'apporter la rigidité nécessaire à l'ensemble.

Le dispositif de maintien 10 comprend les mâchoires inférieure 11i et supérieure 11s, représentées fermées sur la pale 40. Le dispositif de maintien 10 comprend également les mors inférieur 12i et supérieur 12s, comprenant chacun la pluralité de plaques de serrage inférieure 13i et supérieure 13s.

Les dispositifs de maintien 10 et 20 des figures 1 et 2 sont agencés pour être installés dans un mandrin, mais il est également possible de prévoir leur installation dans un étau ou dans un autre outillage.

La figure 3 représente une partie du dispositif de maintien en vue éclatée. Le dispositif de maintien 10 comprend également une pièce de base 17s agencée pour faire partie de la mâchoire 11s représentée en figure 1 et 2, et comprend une cavité arrondie 17sa. Le dispositif de maintien 10 comprend en outre un demi-cylindre 16s doté d'une forme arrière arrondie opposée à la pièce à brider et agencée pour entrer en contact avec la cavité arrondie 17sa de la pièce de base 17s formant partie de la mâchoire 11s.

Le dispositif de maintien 10 comprend une pluralité de plaques de serrage 13s, composée de plusieurs plaques de serrage 13s1, 13s2, 13s3, 13s4, 13s5, 13s6, 13s7, 13s8, 13s9, 13s10 empilées les unes sur les autres dans le sens de leur grand côté, et présentant chacune une surface arrière arrondie opposée à une surface de bridage agencée pour être en contact avec la pale 40.

Le dispositif de maintien 10 comprend également une pluralité de plaques de soutien 15s, constitué de plaques de soutien 15s1, 15s2, 15s3, 15s4, 15s5, 15s6, 15s7, 15s8, 15s9, 15s10 empilées les unes sur les autres dans le sens d'un de leur grand coté. Les plaques de soutien 15s1, 15s2, 15s3, 15s4, 15s5, 15s6, 15s7, 15s8, 15s9, 15s10 comprennent chacune sur leur tranche une surface de soutien, agencée pour être en contact avec les surfaces arrières de la pluralité de plaques de serrage 13s, et présentant une contre-forme de celles-ci, arrondie comme représenté en figure 3. La pluralité de plaques de soutien 15s est agencée entre le demi-cylindre 16s de la pièce de base 17s de la mâchoire 11s et la pluralité de plaques de serrage 13s.

Les plaques de soutien 15s1, 15s2, 15s3, 15s4, 15s5, 15s6, 15s7, 15s8, 15s9, 15s10 et les plaques de serrage 13s1, 13s2, 13s3, 13s4, 13s5, 13s6, 13s7, 13s8, 13s9, 13s10 sont indépendantes les unes par rapport aux autres, de sorte qu'elles peuvent glisser / coulisser et s'adapter à la pièce à brider, tant grâce au pivot formé par la cavité arrondie 17s et le demi-cylindre 16s, que grâce à la surface arrière arrondie de chaque plaque de serrage indépendante et la contre-forme arrondie correspondante de chaque plaque de soutien indépendante, de sorte à réaliser un bridage qui épouse parfaitement la forme de la pièce à brider.

Il est possible de prévoir des plaques de soutien 15s1, 15s2, 15s3, 15s4, 15s5, 15s6, 15s7, 15s8, 15s9, 15s10 faisant face sur toute leur tranche aux plaques de serrage 13s1, 13s2, 13s3, 13s4, 13s5, 13s6, 13s7, 13s8, 13s9, 13s10 sans épaulement, mais en décalant en quinconce les surfaces de contacts entre les plaques de soutien 15s1, 15s2, 15s3, 15s4, 15s5, 15s6, 15s7, 15s8, 15s9, 15s10 et les plaques de serrage 13s1, 13s2, 13s3, 13s4, 13s5, 13s6, 13s7, 13s8, 13s9, 13s10 le long d'une direction vers la pièce de base 17s, de sorte à réaliser une forme semblable à l'épaulement mais en utilisant la surface latérale de la plaque de soutien voisine. Les plaques de serrage 13s1, 13s2, 13s3, 13s4, 13s5, 13s6, 13s7, 13s8, 13s9, 13s10 sont agencées pour transmettre les efforts aux plaques de soutien 15s1, 15s2, 15s3, 15s4, 15s5, 15s6, 15s7, 15s8, 15s9, 15s10 les soutenant, qui sont agencées pour transmettre les efforts via le demi-cylindre 16s à la pièce de base 17s.

Dans un mode de réalisation alternatif, chaque plaque de soutien 15s1, 15s2, 15s3, 15s4, 15s5, 15s6, 15s7, 15s8, 15s9, 15s10 comprend un épaulement afin de recevoir les plaques de serrage 13s1, 13s2, 13s3, 13s4, 13s5, 13s6, 13s7, 13s8, 13s9, 13s10 et afin de définir un espacement entre les plaques de serrage 13s1, 13s2, 13s3, 13s4, 13s5, 13s6, 13s7, 13s8, 13s9, 13s10 formant ainsi un peigne

Il est nécessaire de prévoir au moins un guide latéral 18s1, 18s2 pour les plaques de soutien 15s1, 15s2, 15s3, 15s4, 15s5, 15s6, 15s7, 15s8, 15s9, 15s10 et les plaques de serrage 13s1, 13s2, 13s3, 13s4, 13s5, 13s6, 13s7, 13s8, 13s9, 13s10, et de choisir l'élancement des plaques de sorte à éviter le flambage. Il est en outre possible d'ajuster l'espacement et l'épaisseur des plaques de serrage 13s1, 13s2, 13s3, 13s4, 13s5, 13s6, 13s7, 13s8, 13s9, 13s10 en jouant sur l'épaisseur des plaques de serrage 13s1, 13s2, 13s3, 13s4, 13s5, 13s6, 13s7, 13s8, 13s9, 13s10 et des plaques de soutien 15s1, 15s2, 15s3, 15s4, 15s5, 15s6, 15s7, 15s8, 15s9, 15s10 ou de leur épaulement. Il est également possible de prévoir des lamelles en matière absorbant les chocs et les vibrations, comme par exemple des lamelles de caoutchouc ou de plastique mou en fonction de l'espacement des plaques de serrage 13s1, 13s2, 13s3, 13s4, 13s5, 13s6, 13s7, 13s8, 13s9, 13s10. Il est également possible de réaliser un moulage de caoutchouc afin d'intercaler du caoutchouc entre les plaques de serrage 13s1, 13s2, 13s3, 13s4, 13s5, 13s6, 13s7, 13s8, 13s9, 13s10 de la pluralité de plaques de serrage 13s.

La figure 4, représente une partie de deux dispositifs de maintien comprenant des demi-cylindres afin de compenser une erreur d'alignement de la pièce à brider.

Les dispositifs de maintien 10 et 20 comprennent respectivement des mâchoires inférieures et supérieures dans lesquelles sont agencés des mors tels qu'il a été présenté précédemment. En particulier, les mors comprennent des pluralités de plaques de serrage supérieures 13s, 23s, et inférieures 13i, 23i et des plaques de soutien supérieures 15s, 25s et inférieures 15i, 25i, et des guides latéraux supérieurs 18s1, 18s2, 28s1, 28s2 et inférieurs 18i1, 18i2, 28i1, 28i2. De plus, des demi-cylindres supérieurs 16s, 26s et inférieurs 16i et 26i sont agencés entre les pièces de base supérieures 17s, 27s et inférieures 17i, 27i des mâchoires des dispositifs de maintien 10, 20.

Une pale 40, incluant son pied de pale 40p, est représentée serrée entre les dispositifs de maintien 10, 20. Les demi-cylindres supérieurs 16s, 26s et inférieurs 16i, 26i, permettent de corriger une erreur d'alignement des dispositifs de maintien 10, 20. Il est également possible d'adapter l'orientation des dispositifs de maintien 10, 20 grâce aux formes arrondies arrières des plaques de serrage 13s, 23s, 13i, 23i et des contre-formes des plaques de soutien respectives 15s, 25s, 15i, 25i.

La figure 5 représente une partie du dispositif de maintien avec goujon de serrage à coeur, suivant la présente invention.

Le dispositif de maintien 10 comprend deux mors, un mors inférieur 12i et un mors supérieur 12s respectivement. Chaque mors est constitué d'une pluralité de plaques de serrage, respectivement pluralité de plaques de serrage inférieure 13i pour le mors inférieur 12i et pluralité de plaques de serrage supérieure 13s pour le mors supérieur 12s.

Un goujon de serrage 60i, en collaboration avec deux écrous 61i et une plaque entretoise 62i permet de serrer la pluralité de plaques inférieure 13i. La pluralité de plaques de serrage inférieure 13i comprend une ouverture à coeur 70i destinée à recevoir le goujon de serrage 60i, qui est également usiné avec une forme correspondant à la contre-forme de l'ouverture à coeur 70i, de sorte à réaliser une mâchoire interne. Il en est de même avec la pluralité de plaques de serrage supérieure 13s comprenant une ouverture à coeur 70s, tenue par un goujon de serrage 60s coopérant avec deux écrous 61s et une plaque entretoise 62s. Les pluralités de plaques de serrage 13i, 13s forment un espace 100 destiné à recevoir la pièce à brider non représentée pour des raisons de clarté, mais dont on reconnaît la forme en pale 40 précédemment illustrée. Les pluralités de plaques de serrage 13i, 13s viennent en butée contre les goujons de serrage 60i, 60s afin de réaliser le bridage de la pièce à brider. Les fonctions de fermeture et de maintien général de l'étau peuvent être réalisées par l'intermédiaire des goujons de serrage 60i, 60s.

En d'autres termes, les écrous 61i, 61s permettent en collaboration avec les goujons de serrage ou de plaquage 60i, 60s, de limiter le jeu entre les plaques de serrage 13i, 13s de sorte à les maintenir et autoriser un mouvement relatif des plaques entre elles pour s'ajuster à la pièce à brider.

La contre-forme de chacune des pluralités de plaques de serrage 13i, 13s du côté de la pièce à brider est adaptée à la surface de contact de la pièce à brider. La contre-forme de chacune des pluralités de plaques de serrage 13i, 13s du côté de l'ouverture à coeur 70i, 70s est adaptée à la surface usinée des goujons de serrage 60i, 60s. Il est ainsi très aisé de modifier les plaques des pluralités de plaques de serrage 13i, 13s afin de s'adapter parfaitement à la surface de contact de la pièce à brider, tout en conservant identique les formes de ouvertures à coeur 70i, 70s destinées à recevoir les goujons de serrage 60i, 60s. Il est également possible de prévoir plusieurs goujons 60i, 60s par pluralité de plaques de serrage 13i, 13s afin de réaliser un ajustement mécanique de l'ensemble.

De plus, il est possible de prévoir l'usinage d'un ou plusieurs des goujons de serrage 60i, 60s de façon arrondie afin de permettre à chaque plaque de serrage de la pluralité de plaques de serrage 13i, 13s de pivoter et ainsi s'adapter à la surface de contact de la pièce à brider et s'adapter angulairement. Il est également possible de prévoir un usinage d'un ou plusieurs goujons de serrage 60i, 60s de façon étagée afin de bloquer certaines plaques de la pluralité de plaques de serrage 13i, 13s et en laisser d'autres libres. Il est également possible de prévoir l'usinage de façon spécifique pour chaque goujon de serrage 60i, 60s afin de l'adapter à chaque plaque de la pluralité de plaques de serrage 13i, 13s. En d'autres termes, les goujons de serrage 60i, 60s agissent comme des mâchoires agencées à coeur des pluralités de plaques 13i, 13s et ayant des parties ou portions recevant les pluralités de plaques de serrage 13i, 13s de sorte à permettre le bridage de la pièce à brider. Chaque pluralité de plaques 13i, 13s présente une surface arrière 13ix, 13sx opposée à la pièce à brider qui est en contact avec le goujon de serrage 60i, 60s respectif. Cette surface arrière 13ix, 13sx que l'on retrouve dans les autres modes de réalisation est donc dans ce mode de réalisation agencée à coeur de la pluralité de plaques 13i, 13s, laissant une surface libre 13iy, 13sy libre de serrage ou inutilisée pour le serrage de la pièce à brider.

Un procédé de fabrication d'un dispositif de maintien tel que précédemment décrit pourra comprendre les étapes de détermination d'une surface de contact de la pièce à brider, la pâle 40, comprenant la sous-division de cette surface de contact en contours à brider et une détermination de la forme de chacune des plaques de serrage des pluralités de plaques de serrage 13i, 13s, 23i, 23s. Une fois la détermination de la surface des plaques de serrage effectuée, il conviendra de découper par exemple à l'aide d'un laser, d'un jet d'eau ou d'une machine d'usinage chacune des plaques de la pluralité de plaques de serrage 13i, 13s, 23i, 23s et de marquer chaque plaque pour identification afin de réaliser une surface de bridage sur la tranche de chaque plaque de serrage. Il s'agira ensuite d'empiler la pluralité de plaque de serrage 13i, 13s, 23i, 23s selon les marquages afin de définir la contre-forme de la surface de contact de la pâle 40. Il pourra être ajouter une étape de détermination d'une surface arrière de contact de chaque plaque de serrage afin de la mettre en correspondance avec la surface de contact des plaques de soutien 15s1, 15s2, 15s3, 15s4, 15s5, 15s6, 15s7, 15s8, 15s9, 15s10 ou de leur épaulement.

Un procédé de maintien de la pâle 40 pourra comprendre les étapes suivantes consistant à fournir un dispositif de maintien tel que précédemment décrit, et positionner la pile de plaques de serrage 13i, 13s, 23i, 23s en regard de la surface de contact de la pâle 40, chaque surface de bridage de chaque plaque étant en regard d'une portion respective de la surface de contact de la pâle 40.

On comprendra que diverses modifications et/ou améliorations évidentes pour l'homme du métier peuvent être apportées aux différents modes de réalisation de l'invention décrits dans les revendications.

En particulier, il est fait référence à la possibilité de modeler à l'envie les contre-formes des plaques de serrage en fonction de la forme plus ou moins complexe de la pièce à brider, ainsi que les contre-formes des plaques de soutien. De la même façon, il est possible de prévoir certaines plaques de serrage tenue bloquées grâce à une forme arrière carrée par exemple et d'autres plaques de serrage tenue plus librement grâce à une forme arrière arrondie, afin de servir de référence à l'orientation de la pièce à brider.

## Revendications

1. Dispositif de maintien (10) pour brider une pièce à brider (40) comprenant une surface de contact,
le dispositif de maintien (10) comprenant au moins un mors (12i, 12s) destiné à entrer en contact avec la surface de contact de la pièce à brider (40),
le mors (12i, 12s) comprend une pluralité de plaques de serrage (13i, 13s) indépendantes les unes des autres agencées pour permettre un mouvement relatif entre elles et garantir un contact de chacune d'entre elles avec la pièce à brider (40), empilées les unes sur les autres et comprenant chacune sur leur tranche une surface de bridage agencée pour être en contact avec une portion de la surface de contact de la pièce à brider (40),
et dans lequel les plaques de serrage (13i, 13s) sont empilées le long d'une direction longitudinale de la pièce à brider (40), et dans lequel le dispositif de maintien (10) comprend en outre au moins une mâchoire (11i, 11s) ayant une cavité agencée pour recevoir au moins une portion de la pluralité de plaques de serrage (13i, 13s), et
dans lequel la pluralité de plaques de serrage (13i, 13s) présente une surface arrière opposée à la pièce à brider (40), de forme arrondie de sorte à former une liaison pivot entre la mâchoire (11i, 11s) et la pluralité de plaques (13i, 13s).

2. Dispositif de maintien (10) selon la revendication précédente, dans lequel les plaques ont une épaisseur inférieure à 3 mm.

3. Dispositif de maintien (10) selon l'une des revendications précédentes, dans lequel la surface de bridage de chaque plaque présente un profil de contact spécifique formant une contre-forme de la portion de la surface de contact de la pièce à brider (40).

4. Dispositif de maintien (10) selon la revendication précédente, dans lequel les plaques comprennent un marquage et sont ordonnées afin d'appairer les plaques à une portion respective de la surface de contact de la pièce à brider (40), de sorte à localiser et épouser la pièce à brider (40).

5. Dispositif de maintien (10) selon l'une quelconque des revendications précédentes, comprenant en outre :
- au moins un demi-cylindre (16s), agencé entre l'au moins une mâchoire (11i,11s) et l'au moins un mors (12i, 12s).

6. Dispositif de maintien (10) selon l'une quelconque des revendications précédentes, comprenant en outre :
- une pluralité de plaques de soutien (15i, 15s), chacune étant agencée entre une des plaques de serrage et l'au moins une mâchoire (11i, 11s).

7. Dispositif de maintien (10) selon la revendication précédente, dans lequel :
- chaque plaque de soutien comprend sur sa tranche une surface de soutien agencée pour être en contact avec la surface arrière d'une des plaques de serrage,
- la surface de soutien de chaque plaque de soutien présente un profil de contact spécifique formant une contre-forme d'une des surfaces arrières des plaques de serrage.

8. Dispositif de maintien (10) selon l'une quelconque des revendications précédentes, dans lequel la pluralité de plaques de serrage (13i, 13s) présente une surface arrière opposée à la pièce à brider (40), en appui contre la mâchoire (11i, 11s).

## Patentansprüche

1. Haltevorrichtung (10) zum Spannen eines einzuspannenden Teils (40) einer Anlagefläche umfassend,
wobei die Haltevorrichtung (10) mindestens eine Backe (12i, 12s) umfasst, die dazu bestimmt ist, mit der Kontaktfläche des einzuspannenden Teils (40) in Kontakt zu kommen,
wobei die Backe (12i, 12s) eine Vielzahl von Klemmplatten (13i, 13s) umfasst, die unabhängig voneinander angeordnet sind, um eine Relativbewegung zwischen ihnen zu ermöglichen und einen Kontakt jeder von ihnen mit dem zu spannenden Teil (40) sicherzustellen, aufeinander gestapelt und bei dem sein Rand eine Spannfläche aufweist, die so angeordnet ist, dass sie mit einem Abschnitt der Kontaktfläche des einzuspannenden Teils (40) in Kontakt steht,
und bei dem die Klemmplatten (13i, 13s) entlang einer Längsrichtung des einzuspannenden Teils (40) gestapelt sind und bei dem
die Haltevorrichtung (10) ferner mindestens einen Kiefer (11i, 11s) umfasst mit einem Hohlraum der angeordnet ist, um mindestens einen Teil der Vielzahl von Klemmplatten (13i, 13s) aufzunehmen, und wobei die Vielzahl von Klemmplatten (13i, 13s) eine dem einzuspannenden Teil (40) gegenüberliegende Rückseite mit einer abgerundeten Form aufweist, um eine Drehverbindung zwischen dem Kiefer (11i, 11s) und der Vielzahl von Platten (13i, 13s) zu Bilden.

2. Haltevorrichtung (10) nach dem vorhergehenden Anspruch, wobei die Platten eine Dicke von weniger als 3 mm aufweisen.

3. Haltevorrichtung (10) nach einem der vorhergehenden Ansprüche, wobei die Spannfläche jeder Platte ein spezifisches Kontaktprofil aufweist, das eine Gegenform des Abschnitts der Kontaktfläche des einzuspannenden Teils (40) bildet.

4. Haltevorrichtung (10) nach dem vorhergehenden Anspruch, wobei die Platten eine Markierung aufweisen und so angeordnet sind, dass sie die Platten an einen jeweiligen Abschnitt der Kontaktfläche des einzuspannenden Teils (40) anpassen, um so das zu spannende Teil (40) zu lokalisieren und zu passen.

5. Haltevorrichtung (10) nach einem der vorhergehenden Ansprüche, ferner umfassend:
- mindestens einen Halbzylinder (16s), angeordnet zwischen dem mindestens einen Kiefer(11i, 11s) und der mindestens eine Backe ( 12i, 12s).

6. Haltevorrichtung (10) nach einem der vorhergehenden Ansprüche, ferner umfassend:
- eine Vielzahl von Stützplatten (15i, 15s), wobei jede Stützplatte zwischen einer der Klemmplatten und mindestens einen Kiefer (11i, 11s) angeordnet ist

7. Haltevorrichtung (10) nach dem vorhergehenden Anspruch, wobei:
- jede Stützplatte an ihrem Rand eine Stützfläche aufweist, die so angeordnet ist, dass sie die hintere Fläche einer der Klemmplatten berührt,
- die Stützfläche jeder Stützplatte hat ein spezifisches Kontaktprofil, das eine Gegenform zu einer der Rückseiten der Klemmplatten bildet.

8. Haltevorrichtung (10) nach einem der vorhergehenden Ansprüche, bei der die Vielzahl von Klemmplatten (13i, 13s) eine hintere Fläche gegenüber dem zu klemmenden Teil (40) aufweist, die an der Backe (11i, 11s) anliegt.

## Claims

1. Holding device (10) for clamping a piece to be clamped (40) comprising a contact surface,
the holding device (10) comprising at least one claw (12i, 12s) intended to come into contact with the contact surface of the part to be clamped (40), the claw (12i, 12s) comprises a plurality of clamping plates (13i, 13s) independent of each other arranged to allow a relative movement between them and guarantee a contact of each
of them with the part to be clamped (40), stacked on top of each other and each comprising on their edge a clamping surface arranged to be in contact with a portion of the contact surface of the part to be clamped (40),
and in which the clamping plates (13i, 13s) are stacked along a longitudinal direction of the part to be clamped (40), and in which the holding device (10) further comprises at least one jaw (11i, 11s) having a cavity arranged to receive at least a portion of the plurality of clamping plates (13i, 13s), and in which the plurality of clamping plates (13i, 13s) has a rear surface opposite to the part to be clamped (40), of rounded shape so as to form a pivot connection between the jaw (11i, 11s) and the plurality of plates (13i, 13s).

2. Holding device (10) according to the preceding claim,
in which the plates have a thickness of less than 3 mm.

3. Holding device (10) according to one of the previous claims, in which the clamping surface of each plate has a specific contact profile forming a counter-shape of the portion of the contact surface of the part to be clamped (40).

4. Holding device (10) according to the preceding claim,
in which the plates include a marking and are ordered so as to match the plates to a respective portion of the contact surface of the part to be clamped (40), so as to locate and match the part to be clamped (40).

5. Holding device (10) according to any of the
preceding claims, further comprising:
- at least a half-cylinder (16s), arranged between the at least one jaw (11i, 11s) and the at least one claw (12i, 12s).

6. Holding device (10) according to any of the
preceding claims, further comprising:
- a plurality of support plates (15i, 15s), each being arranged between one of the clamping plates and at least one jaw (11i, 11s).

7. Holding device (10) according to the preceding claim,
in which :
- each support plate has a support surface on its edge
arranged to be in contact with the rear surface of one of the clamping plates
- the support surface of each support plate has a specific contact profile forming a counter-shape of one of the rear surfaces of the clamping plates.

8. Holding device (10) according to any one of the preceding claims, in which the plurality of clamping plates (13i, 13s) has a rear surface opposite the part to be clamped (40), bearing against the jaw ( 11i, 11s).
